# EUROPEAN PATENT APPLICATION

(11) **EP 2 461 610 A1**
(43) Date of publication of application: **06.06.2012**
(21) Application number: 11191961.9
(22) Date of filing: 05.12.2011
(51) Int. Cl.: H04W 4/06

(54) **Apparatus and method of broadcasting emergency information using automatic channel switching**

(30) Priority: 06.12.2010 KR 20100123851
(71) Applicant: Electronics and Telecommunications Research Institute, Daejeon-si 305-700 (KR)
(72) Inventor: Lee, Yong Hoon, 305-747 Daejeon-si (KR); Kim, Geon, 302-742 Daejeon-si (KR); Park, So Ra, 305-768 Daejeon-si (KR); Baek, Myung Sun, 305-350 Daejeon-si (KR); Lee, Yong Tae, 305-308 Daejeon-si (KR)
(74) Representative: Betten & Resch

(57) **Abstract**

Disclosed is an apparatus for broadcasting emergency information, the apparatus including: an emergency information generator which analyzes service setup information related to general broadcasting information and generates emergency information based on a setup environment consistent with the service setup information; a broadcasting information processor which receives the general broadcasting information, transmits the service setup information to the emergency information generator, periodically monitors whether the service setup information is changed, changes a channel for the emergency information on the basis of monitoring results, and generates and modulates a first ensemble transmission interface (ETI) frame including the emergency information and the same channel as a fast information channel transporting control information about the general broadcasting information; a broadcasting information switching unit which selects and outputs one of the first ETI frame and a second ETI frame including the general broadcasting information; and a radio frequency (RF) transmitter which transmits the selected ETI frame through a RF.

## Description

### BACKGROUND OF THE INVENTION

### Field of the invention

The present invention relates to wireless communications, and more particularly, to a method of broadcasting emergency information and a relay embodying the same.

Also, the present invention relates an automatic channel switching method of an ensemble for an emergency broadcasting service with respect to channel switching of terrestrial digital multimedia broadcasting (DMB) and digital audio broadcasting (DAB) services.

Further, the present invention relates to a method of providing emergency broadcasting adaptively encoded in accordance with variation in an advanced video coding (AVC) parameter and a bit-sliced arithmetic coding (BSAC) sampling frequency of changed video and visual radio services at automatic channel switching.

### Related Art

Terrestrial digital multimedia broadcasting (DMB) has been commercialized by adding a multimedia broadcasting service including a video service to a digital audio broadcasting (DAB) system based on the European Eureka-147 standards.

To enhance the quality of broadcasting signals ever since a terrestrial DMB service was commercialized, there have been discussed ways to install a terrestrial DMB relay in a place where buildings are concentrated or a shadow zone such as a mountain. This is to improve reception of the terrestrial DMB by installing the terrestrial DMB relay in the shadow zone or the like region where the reception is bad.

Particularly, such a DMB relay has to be installed in a region such as a tunnel or a subway as well as the foregoing shadow zone to improve the reception. In the future, the relay will be installed even in the tunnel or subway where the reception is poor, so that users can easily watch the DMB anywhere as well as in buildings, mountains or the like the shadow zone.

Conventional terrestrial DMB relays have placed emphasis on their natural function, i.e., a function of relaying a terrestrial DMB signal. However, the relays have no function of dealing with emergency. The relays just perform a function of relaying a broadcasting signal for a certain zone.

Meanwhile, in conventional DMB, a broadcasting service is not provided to only the certain zone, but one broadcasting service is given without distinction of regions. Also, the conventional DMB can provide an emergency broadcasting or disaster broadcasting service to not the certain zone but all regions. For example, if the certain zone is in emergency, it is difficult for the conventional DMB to provide an emergency broadcasting service to only the corresponding zone.

Further, in the case that the above relay is used to provide the emergency broadcasting service, a terminal may malfunction if a broadcaster changes a subchannel service within an ensemble but an emergency broadcasting relay does not reconstruct the ensemble in accordance with the changed subchannel service. Also, if an encoder for a video and visual radio service is replaced in a subchannel, advanced video coding (AVC) parameter setup information, a bit-sliced arithmetic coding sampling frequency, or the like particular parameters may be different from those of the existing encoder.

Accordingly, there are needed an emergency information generator, a broadcasting apparatus and method, in which an encoded stream can be supported to support the same parameter as the changed parameter even in an encoder for the emergency broadcasting, and a terminal can smoothly receive the emergency broadcasting.

### SUMMARY OF THE INVENTION

The present invention provides an apparatus and method for broadcasting a disastrous situation, which happens in a certain zone, to the certain zone.

Also, the present invention provides an apparatus and method for broadcasting emergency information, which encodes an emergency service signal of a certain zone by a predetermined bit rate, and generates a stream in accordance with each of various channels for DMB, thereby providing an emergency broadcasting service to various channels.

Further, the present invention provides an apparatus and method for monitoring change in the existing regular broadcasting service in light of a disastrous situation, which happens in a certain zone, to the certain zone.

Still further, the present invention provides an apparatus and method for reconstructing a transmitted broadcasting service within an ensemble to be equal to the regular broadcasting when the existing regular broadcasting changed in a service is switched into emergency broadcasting.

Still further, the present invention provides an apparatus and method for providing the same service as the existing broadcasting, in which encoding is performed in accordance with changed certain parameters when AVC parameter setup information, a BSAC sampling frequency and the like certain parameters are changed due to replacement of an encoder during a reconstruction process of emergency broadcasting.

Still further, the present invention provides an apparatus and method for sending emergency information to a plurality of relays by using only a single encoder.

In an aspect, there is provided an apparatus for broadcasting emergency information, the apparatus including: an emergency information generator which analyzes service setup information related to general broadcasting information and generates emergency information based on a setup environment consistent with the service setup information; a broadcasting information processor which receives the general broadcasting information, transmits the service setup information to the emergency information generator, periodically monitors whether the service setup information is changed, changes a channel for the emergency information on the basis of monitoring results, and generates and modulates a first ensemble transmission interface (ETI) frame including the emergency information and the same channel as a fast information channel transporting control information about the general broadcasting information; a broadcasting information switching unit which selects and outputs one of the first ETI frame and a second ETI frame including the general broadcasting information; and a radio frequency (RF) transmitter which transmits the selected ETI frame through a RF.

In another aspect, there is provided a method of broadcasting emergency information, the method including: selecting a first mode for broadcasting general broadcasting information or a second mode for broadcasting emergency information; generating an ensemble transmission interface (ETI) frame including information corresponding to the selected mode, on the basis of a setup environment consistent with service setup information related to the general broadcasting information; and modulating and transmitting the ETI frame through a radio frequency (RF).

A first bit rate of the emergency information is set up to be lower than a second bit rate of the general broadcasting information, and a null stream as much as difference between the first bit rate and the second bit rate is inserted in the emergency information.

In still another aspect, there is provided a method of broadcasting emergency information, the method including: generating emergency information based on a setup environment consistent with service setup information related to general broadcasting information; generates and modulates a first ensemble transmission interface (ETI) frame including the emergency information and the same channel as a fast information channel transporting control information about the general broadcasting information; selectively outputting one of the first ETI frame and a second ETI frame including the general broadcasting information; and transmitting the selected ETI frame through a radio frequency (RF).

### BRIEF DESCRIPTION OF THE DRAWINGS

FIG. 1 is a block diagram showing an emergency information broadcasting apparatus according to an exemplary embodiment of the present invention.
FIGs. 2a and 2b are block diagrams of an emergency information generator according to an exemplary embodiment of the present invention.
FIG. 3 is a block diagram showing a broadcasting information processor according to an exemplary embodiment of the present invention.
FIG. 4 is a block diagram showing an emergency broadcasting multiplexer according to an exemplary embodiment of the present invention.
FIG. 5 is a flowchart for explaining operation of the emergency information broadcasting apparatus according to the present invention.

### DESCRIPTION OF EXEMPLARY EMBODIMENTS

Hereinafter, an exemplary embodiment of the present invention will be described in detail with reference to accompanying drawings so that a person having ordinary skill in the art can easily realize it. However, the present invention may be embodied in various forms, and not limited to the exemplary embodiments set forth herein. Further, in the drawings, unrelated parts were omitted to clearly explain an exemplary embodiment of the present invention, and like reference numerals refer to like elements throughout.

Throughout the present description, an expression that a certain part "includes" a certain element is intended not to exclude other elements but to further include other element as long as there is no special mention for opposition. Also, a term "... part" or the like used in the following description means a unit for dealing with at least one function or operation, which can be achieved by hardware, software or combination thereof.

Below, an exemplary embodiment of the present invention will be described with reference to the accompanying drawings.

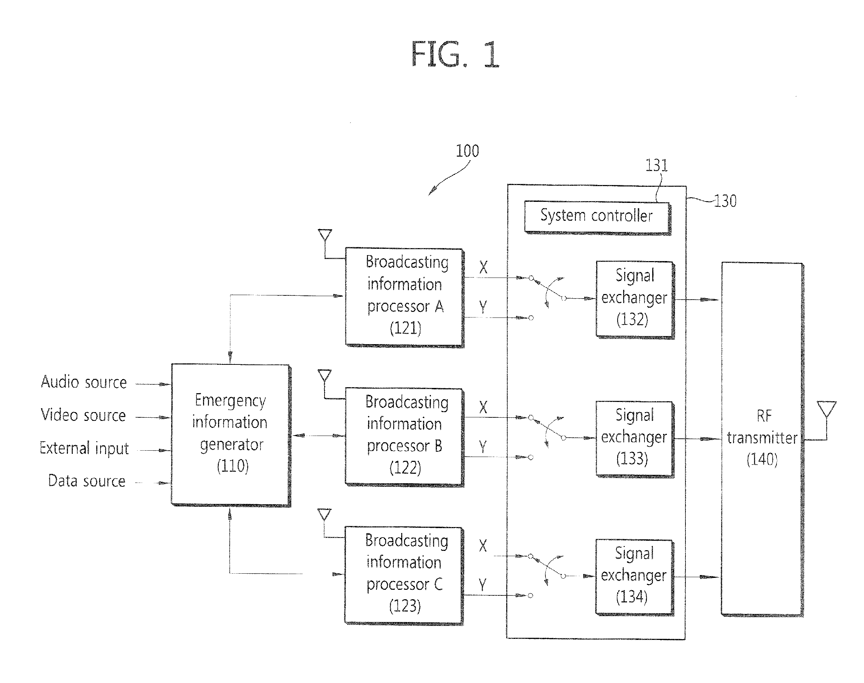

FIG. 1 is a block diagram showing an emergency information broadcasting apparatus according to an exemplary embodiment of the present invention.

Referring to FIG. 1, an emergency information broadcasting apparatus 100 includes an emergency information generator 110, a broadcasting information processor A 121, a broadcasting information processor B 122, a broadcasting information processor C 123, a broadcasting information switching unit 130 and a radio frequency (RF) transmitter 140.

The emergency information generator 110 is a kind of encoder, which generates emergency information from an input audio source, a visual radio source, a video source external input, and data source. At this time, the emergency information generator 110 encodes the emergency information equally to service setup information proper to each broadcasting channel (or ensemble) acquired from each of the broadcasting information processors 121, 122 and 123, and selectively output a stream of the encoded emergency information to each of the broadcasting information processors 121, 122 and 123.

Each of the broadcasting information processor 121, 122 and 123 receives its proper broadcasting information in addition to the encoded emergency information through a receiving antenna. For example, the broadcasting information processor A 121 receives 'MBC' broadcasting, and the broadcasting information processor B 122 receives 'KBS' broadcasting. Each broadcasting information processor 121, 122, 123 generates a first ensemble transport interface (ETI) frame from the stream of the received proper broadcasting information, modulates the ETI fame, and outputs it to a terminal X. Also, each broadcasting information processor 121, 122, 123 generates a second ETI frame from a stream of the encoded emergency information, modulates the ETI frame, outputs it to a terminal Y. Here, each of the terminals X and Y outputs a channel or ensemble.

In this exemplary embodiment, three broadcasting information processors 121, 122 and 123 are illustrated, but not limited thereto. In other words, there is no limit to the number of broadcasting information processors connectable to one emergency information generator 110. Thus, a connection relationship of 1:M is established between the emergency information generator 110 and the broadcasting information processors 121, 122 and 123.

The broadcasting information switching unit 130 includes a system controller 131 and signal exchangers 132, 133 and 134. The proper broadcasting information and the emergency information input to each channel (ensemble) are switched and output. When a disastrous situation happens, the signal exchanger 132, 133, 134 of each channel (ensemble) is switched into the terminal X or the terminal Y under control of the system controller 131, thereby outputting the emergency information.

Thus, the emergency information broadcasting apparatus 100 can operate in two modes by the broadcasting information switching unit 130. A first mode is a general broadcasting mode where the signal exchanger 132, 133, 134 is connected to the terminal X. In the first mode, each broadcasting information processor 121, 122, 123 relays the proper broadcasting information received through the receiving antenna, i.e., a terrestrial-digital multimedia broadcasting (T-DMB) signal through the terminal X, and each signal exchanger 132, 133, 134 is connected to the terminal X, so that the RF transmitter 140 RF-transmits proper broadcasting information, which is input in the form of an intermediate frequency (IF) and has a bandwidth of 1.536MHz, to a terrestrial television (TV) channel (6MHz) as three terrestrial DMB channel (ensemble).

A second mode is an emergency broadcasting mode where the signal exchanger 132, 133, 134 is connected to the terminal Y. In the second mode, each broadcasting information processor 121, 122, 123 receives emergency information encoded in the emergency information generator 110, and multiplexes and outputs it to the terminal Y in accordance with a service state of regular broadcasting, and each signal exchanger 132, 133, 134 is connected to the terminal Y. Further, the RF transmitter 140 transmits the emergency information through a transmitting antenna.

In this exemplary embodiment, a plurality of broadcasting information processors 121, 122, 123 are connected to one emergency information generator 110 to thereby enhance efficiency of system construction. That is, the emergency information (video, visual radio, audio and data service) encoded through one emergency information generator (e.g., video, visual radio, audio, and data service encoder) may be output through a plurality of channels (ensemble) when emergency happens. The reason why one emergency information generator 110 is enough is as follows. For example, video services for respective ensemble being broadcasted are provided at bit rates different from one another, respectively. However, the emergency information may be encoded at a bit rate a little lower than those for video services of each ensemble being broadcasted, and then added with a null stream, i.e., a stream of meaningless information, thereby matching output with the bit rate of the video service of each ensemble. Thus, when the disastrous situation happens, services (video, audio, visual radio, data, etc.) related to the emergency information are collectively output to all ensemble, so that the emergency services having the same contents can be transmitted in each ensemble. Also, a not-real-time service stream for the emergency broadcasting, previously stored through an external input, may be output to each ensemble and serviced.

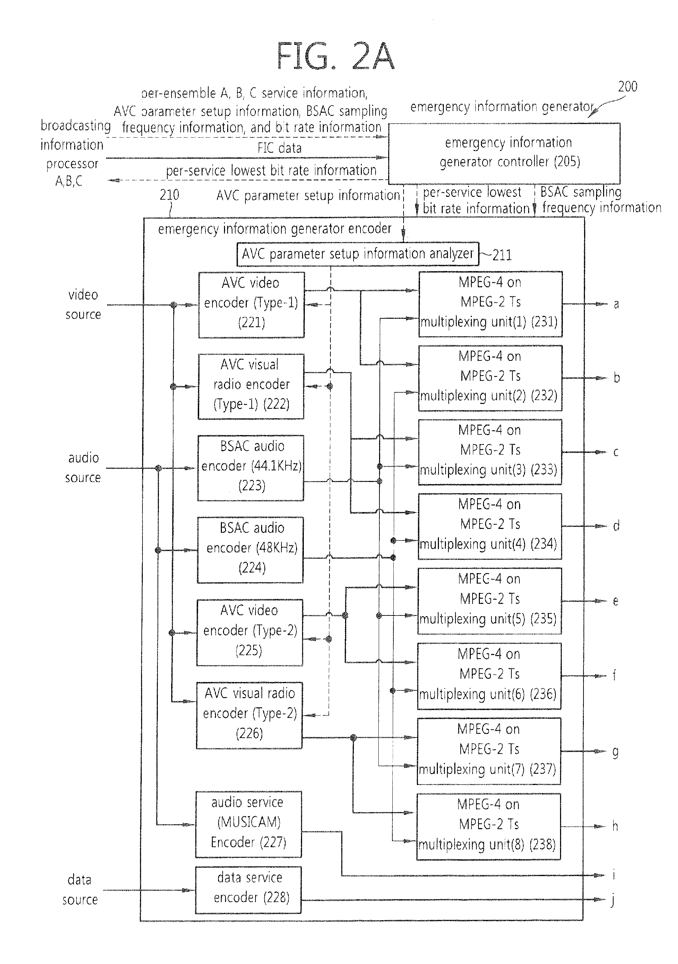

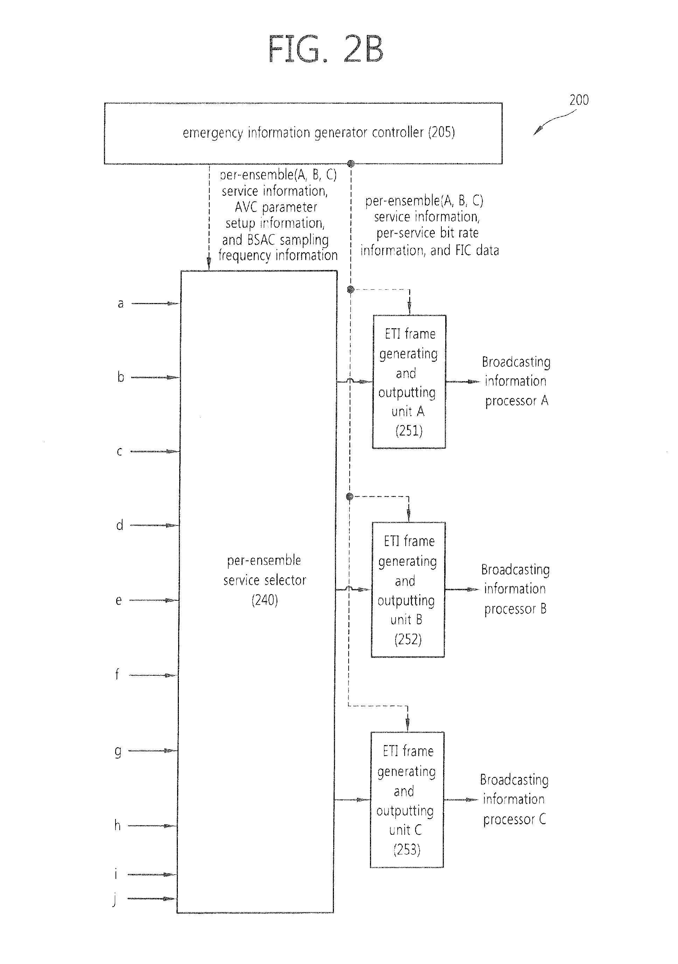

FIGs. 2a and 2b are block diagrams of an emergency information generator according to an exemplary embodiment of the present invention.

Referring to FIGs. 2a and 2b, the emergency information generator 200 includes an emergency information generator controller 205, an emergency broadcasting service encoder 210, a per-ensemble service selector 240, and a plurality of ETI frame generating and outputting units 251, 252, 253.

The emergency information generator controller 205 receives service setup information of broadcasting information proper to each broadcasting information processors A, B and C from each broadcasting information processors A, B and C. The service setup information of the proper broadcasting information includes H.264/moving picture experiment group (MPEG)-4 advanced video coding (AVC) parameter setup information, MPEG-4 bit sliced arithmetic coding (BSAC) sampling frequency information, and fast information channel (FIC) data in the case of service information of each ensemble, bit rate information according to each service, and video and visual radio services of each ensemble.

The emergency information generator controller 205 analyzes the proper broadcasting service setup information and sends each module of the emergency information generator 200 various parameters for generating emergency information needed to each module. For example, the emergency information generator controller 205 compares and determines the bit rates according to the received services (video, visual radio, audio, data), and transmits per-service lowest bit rate information to the broadcasting information processors A, B and C. Further, the emergency information generator controller 205 transmits per-service lowest bit rate information, AVC parameter setup information and BSAC sampling frequency information to the emergency broadcasting service encoder 210. Here, the AVC parameter setup information means values of a picture parameter set and a sequence parameter set, and indicates parameter values generated during an AVC encoding process. Also, the per-ensemble (A, B, C) service information, the AVC parameter setup information, and the BSAC sampling frequency information are given to the per-ensemble service selector 240, and the per-ensemble (A, B, C) service information, the per-service bit rate information and the FIC data are respectively transmitted to the ETI frame generating and outputting units 251, 252 and 253 according to the corresponding ensemble.

The emergency broadcasting service encoder 210 includes an AVC parameter setup information analyzer 211, a plurality of encoders 221, ..., 228, and a plurality of multiplexers 231, ..., 238. The number of encoders 221, ..., 228 may be equal to the number of multiplexers 231, ..., 238. The number of multiplexers 231, ..., 238 is determined on the basis of the kind and combination of the plural encoders 221, ..., 228.

The AVC parameter setup information analyzer 211 receives the AVC parameter setup information from the emergency information generator controller 205, and analyzes it to determine the types of video encoders 221 and 225 and visual radio encoders 222, 226. First and second AVC video encoder types 221 and 225 and first and second AVC visual radio encoders 222 and 226 are informed for the encoding in accordance with a type 1 and a type 2.

The video and visual radio services are encoded on the basis of the lowest bit rate information, in which the encoding types of the AVC video encoders 221, 225, the AVC visual radio encoders 222, 226 and the BSAC audio encoders 223, 224 are determined in consideration of AVC parameter setup information, BSAC sampling frequency emergency information, and the number of cases according to ensemble input from the emergency information generator controller 205.

For example, if the AVC parameter setup information is input from the broadcasting information processors A, B and C in the form of two types, i.e., a first type (where a PPS NAL unit has a value of 68 CE 28 80 and an SPS NAN unit has a value of 67 42 00 0D 95 A0 50 7C 40) and a second type (where the PPS NAL unit has a value of 28 CE 02 58 80 and the SPS NAL unit has a value of 27 42 80 0D 95 A0 50 7C 40), and the BSAC sampling frequency is input in the form of two types of 44.1KHz and 48KHz, modules of the emergency broadcasting service encoder 210 are configured as shown in FIG. 2.

The plurality of encoders 221, ..., 228 includes the first AVC video encoder type 221 for video encoding of a video service, the first visual radio encoder type 222 for video encoding of a visual radio service, the BSAC audio encoders 223 and 224 for encoding video and audio of the visual radio service, the second AVC video encoder type 225, the second AVC visual radio encoder type 226, the audio service encoder 227, and the data encoder 228.

Basically, each of the encoders 221, ..., 228 encodes and outputs each service in accordance with the lowest bit rate information received from the emergency information generator controller 205. Each type of the AVC video encoders 221 and 225 and the AVC visual radio encoders 222 and 226 receives a video source and encodes it in accordance with the parameter setup analysis information received from the AVC parameter setup information analyzer 211.

The respective outputs of the BSAC audio encoders 223 and 224 are based on encoding at 44.1KHz and 48KHz in accordance with the sampling frequency information received from the emergency information generator controller 205. The respective outputs of the audio service encoder 227 and the data service encoder 228 are based on the encoding by their own methods.

There are determined MPEG-4 on MPEG-2 TS multiplexers 231, ..., 238 that perform multiplexing to get final outputs in the form of a transport stream (TS) based on an elementary stream (ES) output from the plurality of encoders 221, ..., 228.

The MPEG-4 on MPEG-2 TS multiplexers 231, ..., 238 receive video and visual radio ESs and an BSAC audio ES and perform multiplexing based on MPEG-4 on MPEG-2 in the form of the TS. In this multiplexing process, four transport streams are output by applying two sampling frequencies of a BSAC audio encoder with respect to two AVC video encoder types. That is, it will be understood that total eight transport streams are output since four transport streams are output by applying two sampling frequencies of the BSAC audio encoder with regard to the two types.

Also, if the AVC parameter setup information and the BSAC sampling frequency information are known in advance, the encoding for the output is achieved depending on the number of types and the number of BSAC sampling frequencies without passing through the AVC parameter setup information analyzer 211.

The BSAC audio encoders 223 and 224 for a video service and a masking pattern adapted universal subband integrated coding and multiplexing (MUSICAM) encoder for an audio service may be replaced by another encoder based on advanced audio coding (AAC), MPEG 4, AAC+, etc. as well as MUSICAM. Thus, the audio service may be transmitted by a digital audio broadcasting (DAB)+ method.

The per-ensemble service selector 240 selects a service stream corresponding to the subchannel of each ensemble in consideration of the per-ensemble subchannel service information, the AVC parameter setup information, and the BSAC sampling frequency information received from the emergency information generator controller 205 among the service streams, and outputs it to each of the ETI frame generating and outputting units 251, 252 and 253. In particular, the duplicate stream may be output to each of the ETI frame generating and outputting units 251, 252 and 253, and therefore a function of distributing and outputting one stream is added.

Each of the ETI frame generating and outputting units 251, 252 and 253 generates an ETI frame based on the FIC data needed for configuring the ETI frame in addition to each per-ensemble service information and the bit rate information received from the emergency information generator controller 205 with regard to each input service stream; performs ensemble multiplexing; outputs the ETI frame as an ETI stream through a hardware interface; and sends each ETI stream to the corresponding broadcasting information processor A, B, or C.

Thus, the emergency information (video, visual radio, audio, and data service) encoded by one emergency information generator 200 can be output through the plurality of broadcasting information processors when a disastrous situation happens, so that the broadcasting apparatus can maintain the existing structure as it is and have no need of encoders according to the broadcast channels. Accordingly, the broadcasting apparatus can be easily embodied and have a simple configuration.

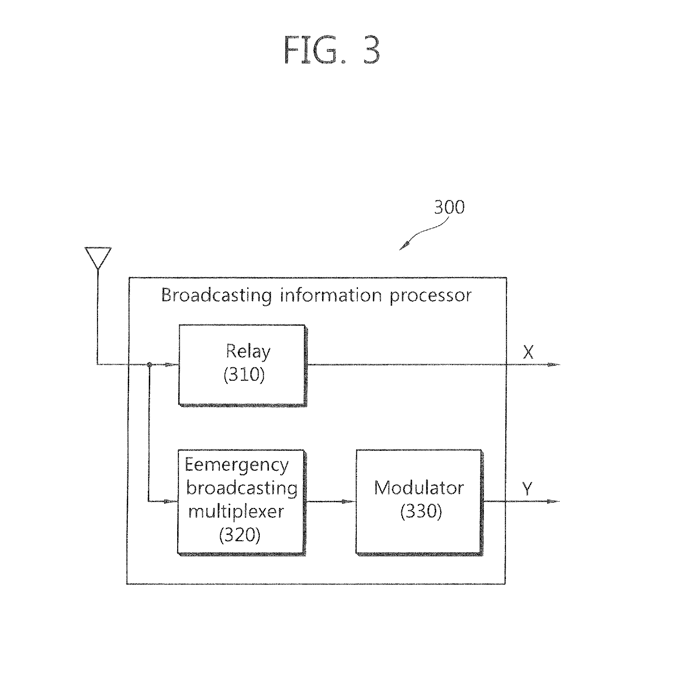

FIG. 3 is a block diagram showing a broadcasting information processor according to an exemplary embodiment of the present invention.

Referring to FIG. 3, a broadcasting information processor 300 is one of the broadcasting information processors 121, 122 and 123 shown in FIG. 1. Any broadcasting information processors connected to the emergency information generator may have the same configuration as the broadcasting information processor 300 of FIG. 3.

The broadcasting information processor 300 includes a relay 310, an emergency broadcasting multiplexer 320, and a modulator 330. Further, an output terminal of the broadcasting information processor 300 includes an terminal X and a terminal Y.

The relay 310 relays proper broadcasting information such as a T-DMB signal and outputs it to the terminal X, so that the proper broadcasting information can be output to a broadcasting information switching unit via the terminal X.

The emergency broadcasting multiplexer 320 receives the proper broadcasting information from the receiving antenna, analyzes the FIC information, determines a transmission data rate of each service in the existing broadcasting on the basis of results from analyzing the FIC information, and provides information about the transmission data rate of each service to the emergency information generator. Also, the emergency broadcasting multiplexer 320 sends the emergency information generator the service setup information of the proper broadcasting information received from the relay 310. Therefore, the emergency information generator can generate a stream based on the service setup information of the proper broadcasting information, and the emergency broadcasting multiplexer 320 performs ensemble multiplexing by receiving the stream and configuring it into the same broadcast service as the existing broadcasting.

The modulator 330 receives an ETI signal from the emergency broadcasting multiplexer 320 and modulates it based on coded orthogonal frequency division multiplexing (COFDM), thereby outputting the modulated ETI signal to the terminal Y.

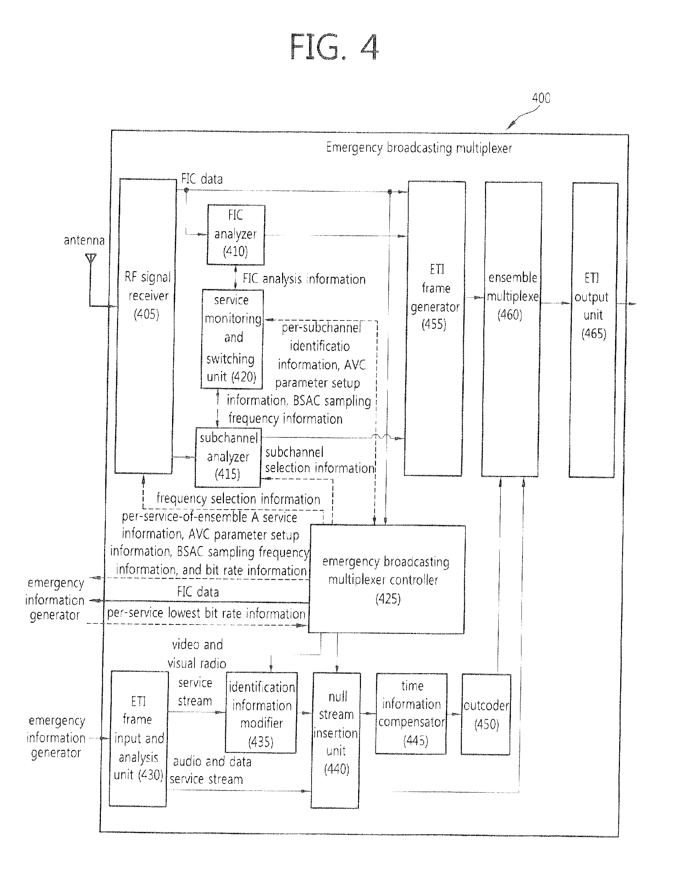

Detailed configuration of the emergency broadcasting multiplexer 320 will be described with reference to FIG. 4.

FIG. 4 is a block diagram showing an emergency broadcasting multiplexer according to an exemplary embodiment of the present invention.

Referring to FIG. 4, an emergency broadcasting multiplexer 400 includes an RF signal receiver 405, an FIC analyzer 410, a subchannel analyzer 415, a service monitoring and switching unit 420, an emergency broadcasting multiplexer controller 425, an ETI frame input and analysis unit 430, an identification information modifier 435, a null stream insertion unit 440, a time information compensator 445, an outcoder 450, an ETI frame generator 455, an ensemble multiplexer 460, and an ETI output unit 465.

First, if an ensemble A channel is selected in accordance with frequency selection information of the emergency broadcasting multiplexer controller 425, the RF signal receiver 405 receives the ensemble A channel among RF signals input through an antenna, transmits the FIC data to the FIC analyzer 410, the ETI frame generator 455 and the emergency broadcasting multiplexer controller 425, and outputs data of each main service channel (MSC) to the subchannel analyzer 415.

The FIC analyzer 410 periodically analyzes the input FIC data on the basis of a control signal of the service monitoring and switching unit 420, informs the service monitoring and switching unit 420 of the analyzed information (e.g., service configuration information according to subchannels within the ensemble, a bit rate information according to subchannels, etc.), and sends the analyzed information to the ETI frame generator 455 so that the ETI frame generator 455 can configure the same frame as the ETI frame of the proper broadcasting information.

The subchannel analyzer 415 periodically analyzes the subchannels corresponding to the video and visual radio services by a control signal based on FIC analysis information received from the service monitoring and switching unit 420; transmits the identification information according to the subchannels, the AVC parameter information, the BSAC sampling frequency information, etc. to the service monitoring and switching unit 420; and outputs data about the subchannel selected by the control signal of the emergency broadcasting multiplexer controller 425 to the ETI frame generator 455. At this time, the data of the selected subchannel is directly inserted as a subchannel not used for the emergency broadcasting when the ETI frame generator 455 configures the ensemble in the future.

Detailed description of the respective analysis processes for the subchannels corresponding to the video and visual radio services is as follows. Since the video and visual radio services to be analyzed are provided in the form of transport streams outcoded by 208 bytes, the input video and visual radio service streams are outdecoded (i.e., decoded with respect to convolutional de-interliving and reed-solomon (RS) error correction) and then the decoded streams are analyzed, thereby parsing identification information, AVC video parameter setup information, and BSAC audio sampling frequency information.

Here, the identification information is information related to a video signal, which may include various packet identifier (PID) information in an MPEG-2 level such as program allocation table (PAT) PID, program mapping table (PMT) PID, program clock reference (PCR) PID, video- and audio-related PID, object descriptor (OD), and BIFs PID or the like, and information related to various elementary stream identifier (ES ID) corresponding to an MPEG-4 level. Also, the AVC video parameter setup information and the BSAC audio sampling frequency information can be ascertained by respectively parsing "PictureParameter SetNALUnit /SequenceParameterSet NALUnit of AVCDecoder ConfigurationRecord" and "Sampling FrequncyIndex of AudioSpecificConfig" fields to a Decoder Specific Info" field in the OD.

The service monitoring and switching unit 420 periodically monitors the FIC analysis information received from the FIC analyzer 410 and the subchannel analysis information received from the subchannel analyzer 415, and informs the emergency broadcasting multiplexer controller 425 of the monitored results. In particular, as a result of the analysis, if there is a change in the configuration of the subchannel in the ensemble (in other words, if service configuration is changed), the emergency broadcasting multiplexer controller 425 is informed of per-subchannel identification information, AVC parameter setup information, BSAC sampling frequency information, etc. about each video and visual radio services in the changed ensemble in addition to the subchannel service configuration information and per-subchannel bit rate information of the changed ensemble.

Although there is no change in the configuration of the subchannel in the ensemble at the FIC analysis, if any of the per-subchannel identification information, the AVC parameter setup information and the BSAC sampling frequency information about the respective video and visual radio services in the ensemble is changed, the emergency broadcasting multiplexer controller 425 is immediately informed of the changed information. Also, the monitoring period of the service monitoring and switching unit 420 is determined and noticed by the emergency broadcasting multiplexer controller 425, and the FIC and subchannel analysis are carried out and monitored in accordance with the determined monitoring period.

The emergency broadcasting multiplexer controller 425 informs the RF signal receiver 405 of frequency information of a channel (ensemble) for reception so that the RF signal receiver 405 can receive a desired channel, and informs the subchannel analyzer 415 of the subchannels not used for emergency broadcasting so that selected subchannels can be output to the ETI frame generator 455. Also, the emergency broadcasting multiplexer controller 425 receives the subchannel service configuration information and the per-subchannel bit rate information of the input ensemble, and service setup information of proper broadcasting information such as the per-subchannel identification information, the AVC parameter setup information, the BSAC sampling frequency information about the video and visual radio services from the service monitoring and switching unit 420, and informs the emergency information generator of them.

Particularly, the emergency broadcasting multiplexer controller 425 determines the monitoring period and notifies the service monitoring and switching unit 420 of the monitoring period through a control signal in order to periodically monitor a change in the service setup information of the proper broadcasting information. When there is a change in the service setup information of the proper broadcasting information, the emergency broadcasting multiplexer controller 425 receives changed information from the service monitoring and switching unit 420 and notifies the emergency information generator of all the information. Since the emergency information generator and the emergency broadcasting multiplexer 400 use an ETI interface, the emergency broadcasting multiplexer controller 425 receives the FIC data, needed when the emergency information generator configures the ensemble, from the RF signal receiver 405 and outputs it to the emergency information generator.

Among the information received from the service monitoring and switching unit 420, the identification information is transmitted to the identification information modifier 435. Also, the per-service lowest bit rate information received from the emergency information generator and the per-subchannel bit rate information received from the service monitoring and switching unit 420 are compared and calculated to thereby inform the null stream insertion unit 440 of null stream insertion information according to respective subchannels.

The ETI frame input and analysis unit 430 analyzes each subchannel service in the ensemble stream received from the emergency information generator and outputs the video and visual radio services and the audio and data services to the identification information modifier 435 and the null stream insertion unit 440, respectively.

The identification information modifier 435 compares the identification information received from the emergency broadcasting multiplexer controller 425 with the identification information in the video and visual radio TS received from the ETI frame input and analysis unit 430, and then modifies it to be equal to the identification information received from the emergency broadcasting multiplexer controller 425, thereby outputting the identification information to the null stream insertion unit 440.

The null stream insertion unit 440 inserts a null stream with regard to audio, video and data streams in accordance with size information of a stream based on a bit rate informed by a transmission rate service controller, and then outputs the audio, video and data streams. In the case of the video steam, the null stream is inserted with an appropriate size as a unit of the transmission stream and the elementary stream, in which a null packet is inserted in consideration of the size of streams increased in the following outcoding process. For example, assume that ensemble of a broadcasting station A is configured with video of 544Kbps, audio of 128Kbps and data of 96Kbps, ensemble of a broadcasting station B is configured with video of 512Kbps, audio of 96Kbps and data of 128Kbps, and ensemble of a broadcasting station C is configured with video of 544Kbps, audio of 192Kbps and data of 64Kbps.

Because the emergency information generator performs encoding at substantially the lowest bit rate with regard to each service, a video service encoder, an audio service encoder and a data service encoder perform the encoding at bit rates less than 512Kbps, 96Kbps and 64Kbps, respectively. However, in the case of the video service encoder, the encoding is performed by taking the bit rate increased after the outcoding into account. That is, the encoding is performed at a bit rate excluding the bit rate increased by the outcoding. Thus, the video service encoder, the audio service encoder and the data service encoder respectively perform the encoding by the lowest bit rates 512Kbps, 96Kbps and 64Kbps, the null stream insertion unit 440 inserts the null streams as much as video of 32(544-512)Kbps, audio of 32(128-96)Kbps and data of 32(96-64)Kbps in the case of the broadcasting station A with respect to respective services. In this case of video service, he bit rate generated due to the outcoding is taken into account.

Thus, when the broadcasting service of the broadcasting proper to each channel is changed, it is immediately monitored by the service monitoring and switching unit 420, so that the broadcasting service in the ensemble sent when switched to the emergency broadcasting can be reconstructed equally to a setup state of the proper broadcasting. Also, if there is a change in a certain parameter (AVC parameter setup information, BSAC sampling frequency, etc.) during the above reconstructing process, the encoding is performed corresponding to the changed certain parameter to provide the same service as the existing broadcasting, so that a terminal can normally receive the emergency information without additional operation when a disastrous situation happens in a tunnel or an underground.

The time information compensator 445 receives the video stream from the null stream insertion unit 440 and compensates for time information changed due to the insertion of the null packet. For example, in the case of compensating for the time information of a transport stream (TS) packet, program clock reference (PCR), object clock reference (OCR), decoding time setup (DTS), composition time stamp (CTS), a continuity counter value of the TS packet, etc. have to be modified to have continuity without disconnection and thus not to be changed in the time information even though the TS packet filled with the null packet is added. If the time information of the video stream is not compensated, a receiving module or terminal cannot properly decode the video stream and thus there arise a phenomenon that a discontinuous screen is successively shown or a phenomenon that the terminal itself does not operate.

The outcoder 450 outcodes a TS packet of 188 bytes received from the time information compensator 445 and outputs it in the form of a TS packet of 204 bytes.

It is illustrated that the outcoder 450 is placed to follow the time information compensator 445, but not limited thereto. Alternatively, the outcoder 450 may be placed to precede the time information compensator 445 or precede the null stream insertion unit 440 and encode an input signal.

The ETI frame generator 455 configures an ETI frame with an analyzed FIC received from the FIC analyzer 410 and outputs the configured ETI frame to the ensemble multiplexer 460. If there is a service not used for the emergency broadcasting, the service not used is received from the subchannel analyzer 415 and output as being filled with data in an assigned location of a main stream data (MST) in accordance with determination of the transmission rate service controller.

The ensemble multiplexer 460 multiplexes and outputs the emergency information (e.g., video, audio, visual radio and data for emergency broadcasting) received through an ETI analyzer to the ETI frame generated in the ETI frame generator 455. For example, the ensemble multiplexer 460 maintains all parts of the ETI frame received from the ETI frame generator 455 like the existing broadcasting, but multiplexes the emergency information by changing it into streams for video, audio, data or the like services generated for the emergency broadcasting in the emergency information generator while excluding FIC data from main stream data (MST) of the ETI frame (i.e., equally to the FIC of the existing broadcasting). At this time, the respective services have to have the same bit rates as those of the existing broadcasting.

The EIT output unit 465 outputs the ETI frame received from the ensemble multiplexer 460 into an ETI stream through a hardware interface.

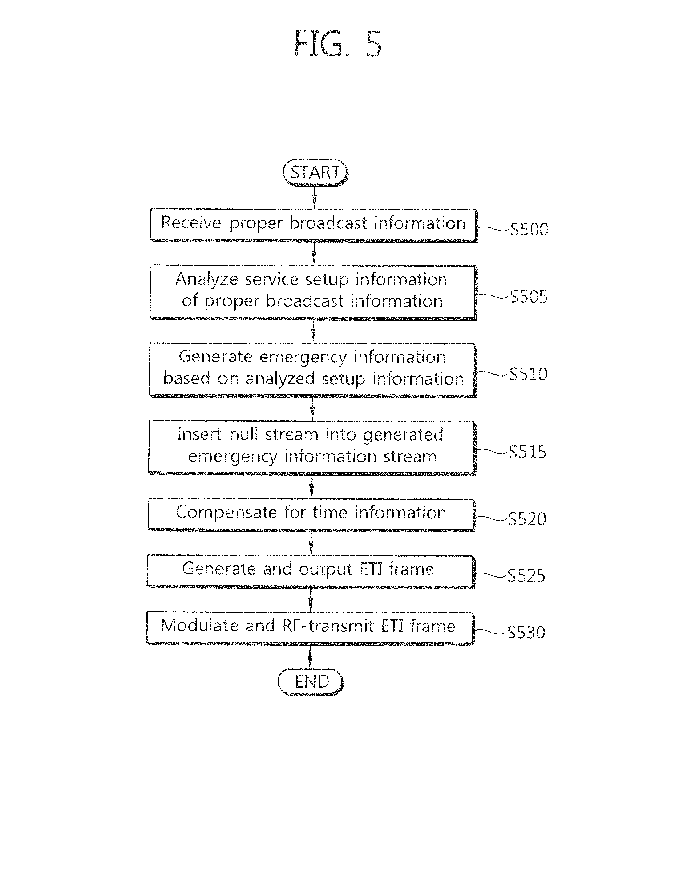

FIG. 5 is a flowchart for explaining operation of the emergency information broadcasting apparatus according to the present invention.

Referring to FIG. 5, the emergency information broadcasting apparatus receives broadcasting information proper to each channel (or ensemble) (S500). Here, each channel may be provided in plural, and may be individually received by the broadcasting information processor.

The emergency information broadcasting apparatus analyzes the service setup information of the received proper broadcasting service (S505). The service setup information of the received proper broadcasting service includes service information of each ensemble, bit rate information per service, H.264/MPEG-4 AVC parameter setup information in the case of video and visual radio services for each ensemble, MPEG-4 BSAC sampling frequency information, and FIC data.

On the basis of the analyzed setup information, the emergency information broadcasting apparatus acquires a parameter for generating the emergency information, and generates the emergency information based on the parameters (S510). The parameter for generating the emergency information is a parameter needed for generating the emergency information, which includes per-service lowest bit rate information, AVC parameter setup information, BSAC sampling frequency information, per-ensemble service information, and FIC data.

The bit rate of the emergency information is determined in accordance with the lowest bit rate information according to services. Further, the emergency information is encoded on the basis of AVC video and visual radio encoding types determined by the AVC parameter setup information and a BSAC audio encoding type determined by the BSAC sampling frequency information, and multiplexed into an MPEG-2 transport stream.

The emergency information broadcasting apparatus inserts a null stream having a predetermined size in the stream of the generated emergency information (S515). The size of the null stream to be inserted is determined on the basis of the per-service lowest bit rate, a bit rate that has to be provided by an original service, and a bit number added at outcoding. The size of the null stream becomes larger as the lowest bit rate gets smaller. In other words, the size of the null stream becomes smaller as the lowest bit rate gets larger. Here, the null stream may be a kind of packet.

The emergency information broadcasting apparatus compensates for the time information (S520). The time information according to respective streams, which is changed by the insertion of the null stream, is compensated and output. For example, in light of compensating for the time information with respect to the TS packet, the PCR, the OCR, the DTS, the CTS and the continuity counter value of the TS packet, etc. are modified to have continuity without disconnection, so that time information cannot be changed even though the TS packet filled with the null stream is added.

The emergency information broadcasting apparatus generates and outputs the ETI frame to the modulator (S525). The ETI frame has the same structure as the ETI frame for proper broadcasting information. That is, the ETI frame for emergency information includes the same FIC data as that in the ETI frame for the proper broadcasting information, and has the same transmission bit rate, AVC parameter setup information and BSAC sampling frequency information.

The emergency information broadcasting apparatus modulates and RF-transmits the ETI frame (S530). The emergency information broadcasting apparatus receives the ETI frame and transmits it using a radio frequency after modulation, in which the modulation is based on COFDM.

Thus, the emergency information of a certain region is encoded using a single encoder (emergency information generator) in the broadcasting apparatus by a predetermined bit rate, the null streams are selectively inserted in accordance with respective main service bit rates of various channels of digital multimedia broadcasting, and the emergency information with the null streams is multiplexed and broadcasted by various broadcasting standards, so that the emergency information of the certain region can be provided to many broadcasting channels of users located in the corresponding region.

As apparent from the above description, since emergency information encoded through a single encoder can be output to many broadcasting information processors when a disastrous situation happens, the broadcasting apparatus can maintain the structure of the existing broadcasting apparatus and has no need of including encoders according to broadcasting channels. Accordingly, the broadcasting apparatus can be easily achieved and have a simple configuration. Also, the emergency information is multiplexed and broadcasted by various broadcasting standards, so that emergency information of a certain region can be given to many broadcasting channels of users placed in the relevant region.

While the present invention has been particularly shown and described with reference to exemplary embodiments thereof, it will be understood by those skilled in the art that various changes in form and details may be made therein without departing from the spirit and scope of the invention as defined by the appended claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

According to an exemplary embodiment, there is disclosed an apparatus for broadcasting emergency information, the apparatus including: an emergency information generator which analyzes service setup information related to general broadcasting information and generates emergency information based on a setup environment consistent with the service setup information; a broadcasting information processor which receives the general broadcasting information, transmits the service setup information to the emergency information generator, periodically monitors whether the service setup information is changed, changes a channel for the emergency information on the basis of monitoring results, and generates and modulates a first ensemble transmission interface (ETI) frame including the emergency information and the same channel as a fast information channel transporting control information about the general broadcasting information; a broadcasting information switching unit which selects and outputs one of the first ETI frame and a second ETI frame including the general broadcasting information; and a radio frequency (RF) transmitter which transmits the selected ETI frame through a RF. Since emergency information encoded through a single encoder can be output to many broadcasting information processors when a disastrous situation happens, the broadcasting apparatus can maintain the structure of the existing broadcasting apparatus and has no need of including encoders according to broadcasting channels. Accordingly, the broadcasting apparatus can be easily achieved and have a simple configuration. Also, the emergency information is multiplexed and broadcasted by various broadcasting standards, so that emergency information of a certain region can be given to many broadcasting channels of users placed in the relevant region.

## Claims

1. An apparatus for broadcasting emergency information, the apparatus comprising:
an emergency information generator which analyzes service setup information related to general broadcasting information and generates emergency information based on a setup environment consistent with the service setup information;
a broadcasting information processor which receives the general broadcasting information, transfers the service setup information to the emergency information generator, periodically monitors whether the service setup information is changed, changes a channel for the emergency information on the basis of monitoring results, and generates and modulates a first ensemble transmission interface (ETI) frame comprising the emergency information and the same channel as a fast information channel transporting control information about the general broadcasting information;
a broadcasting information switching unit which selects and outputs one of the first ETI frame and a second ETI frame comprising the general broadcasting information; and
a radio frequency (RF) transmitter which transmits the selected ETI frame through a RF.

2. The apparatus of claim 1, wherein the broadcasting information processor comprises a null stream insertion unit which inserts a null stream in the emergency information and controls a bit rate of the emergency information, and
the first ETI frame further comprises the null stream.

3. The apparatus of claim 2, wherein the broadcasting information processor comprises a time information compensator which compensates for time synchronization of the emergency information changed as the null stream is inserted.

4. The apparatus of claim 3, wherein the broadcasting information processor comprises an outcoder which encodes the emergency information, of which the time synchronization is compensated for, by convolutional interleaving and error correction.

5. The apparatus of anyone of claims 1 to 4, wherein the service setup information comprises at least one of service information of each ensemble, bit rate information according to respective services, video and visual radio parameter setup information about each ensemble, bit sliced arithmetic coding (BSAC) sampling frequency information, bit rate information of an audio stream, bit rate information of a data stream, and data of the fast information channel.

6. The apparatus of anyone of claims 1 to 5, wherein the setup environment consistent with the service setup information is set up on the basis of at least one of information about the lowest bit rate among bit rates of a plurality of service streams related to the general broadcasting information, advanced video coding (AVC) parameter setup information, bit sliced arithmetic coding (BSAC) sampling frequency information, bit rate information of an audio stream, and a bit rate information of a data stream.

7. The apparatus of claim 6, wherein the emergency information generator comprises an AVC parameter setup information analyzer which determines a type of a plurality of AVC video encoders on the basis of the AVC parameter setup information.

8. The apparatus of anyone of claims 1 to 7, wherein a connection relationship of 1:M is established between the emergency information generator and the broadcasting information processor.

9. A method of broadcasting emergency information, the method comprising:
selecting a first mode for broadcasting general broadcasting information or a second mode for broadcasting emergency information;
generating an ensemble transmission interface (ETI) frame comprising information corresponding to the selected mode, on the basis of a setup environment consistent with service setup information related to the general broadcasting information; and
modulating and transmitting the ETI frame through a radio frequency (RF),
wherein a first bit rate of the emergency information is set up to be lower than a second bit rate of the general broadcasting information, and a null stream as much as difference between the first bit rate and the second bit rate is inserted in the emergency information.

10. The method of claim 9, wherein the second bit rate is the lowest bit rate among bit rates of a plurality of service streams related to the general broadcasting information.

11. The method of claim 10, wherein if a configuration of a subchannel for the general broadcasting information is changed, the emergency information is generated on the basis of changed service setup information.

12. A method of broadcasting emergency information, the method comprising:
generating emergency information based on a setup environment consistent with service setup information related to general broadcasting information;
generates and modulates a first ensemble transmission interface (ETI) frame comprising the emergency information and the same channel as a fast information channel transporting control information about the general broadcasting information;
selectively outputting one of the first ETI frame and a second ETI frame comprising the general broadcasting information; and
transmitting the selected ETI frame through a radio frequency (RF).

13. The method of claim 12, further comprising inserting a null stream in the emergency information and controlling a bit rate of the emergency information,
wherein the first ETI frame further comprises the null stream.

14. The method of claim 12 or 13, further comprising compensating for time synchronization of the emergency information changed as the null stream is inserted.

15. The method of claim 14, further comprising encoding the emergency information, of which the time synchronization is compensated for, by convolutional interleaving and error correction.
